# EUROPÄISCHE PATENTSCHRIFT

(11) **EP 3 142 039 B1**
(45) Veröffentlichungstag und Bekanntmachung des Hinweises auf die Patenterteilung: **30.06.2021**
(21) Anmeldenummer: 16187750.1
(22) Anmeldetag: 08.09.2016
(51) Int. Cl.: G06K 7/08, G07F 19/00, G07F 7/08, G06K 13/08

(54) **SELBSTBEDIENUNGSTERMINAL MIT KARTENLESEEINRICHTUNG UND ÜBERWACHUNGSVERFAHREN**
SELF-SERVICE TERMINAL WITH CARD READER AND METHOD FOR MONITORING
TERMINAL SELF-SERVICE ÉQUIPÉ AVEC DISPOSITIF DE LECTURE DE CARTE AINSI QUE PROCÉDÉ DE SURVEILLANCE

(30) Priorität: 09.09.2015 DE 102015115194
(43) Veröffentlichungstag der Anmeldung: 15.03.2017
(73) Patentinhaber: Wincor Nixdorf International GmbH, 33106 Paderborn (DE)
(72) Erfinder: DIETZ, Oliver, 33178 Borchen (DE)

(56) Entgegenhaltungen:
- US-A1- 2011 240 738
- US-A1- 2014 217 169
- US-B1- 6 491 216
- None

## Beschreibung

Die Erfindung betrifft ein Selbstbedienungsterminal mit einer Kartenleseeinrichtung, insbesondere einen Geldautomaten, gemäß dem Oberbegriff des Anspruchs 1. Des Weiteren betrifft die Erfindung ein Verfahren zur Überwachung desselben gemäß dem Oberbegriff des nebengeordneten Anspruchs.

### Gebiet der Erfindung:

Bei Selbstbedienungsterminals, auch kurz SB-Terminals genannt, sind häufig die darin verbauten Kartenleseeinrichtungen ein vorrangiges Ziel für Manipulationsversuche und Skimmingangriffe. Denn zur Bedienung von SB-Terminals, insbesondere von Geldautomaten, benötigt der Nutzer bzw. Kunde eine Bankkarte, die üblicherweise einen Chip sowie einen Magnetstreifen aufweist, auf denen Kartendaten einschließlich der persönlichen Kunden- und Kontozugriffsdaten gespeichert sind. Leider werden an SB-Terminals in zunehmendem Maße Manipulationen durch Dritte vorgenommen, um auf betrügerische Weise an diese Kartendaten zu gelangen. Hierzu wird u.a. versucht, in den Kartenschlitz der Kartenleseeinrichtung möglichst unauffällig eine spezielle Ausspähvorrichtung einzuführen, die geeignet ist, den Magnetstreifen direkt auszulesen oder sich an eine interne / geräteeigene Datenschnittstelle (z.B. USB-Schnittstelle) der Kartenleseeinrichtung anzudocken. Damit sollen letztendlich die Kartendaten ausgelesen werden, um eine illegale Kopie der Bankkarte anfertigen zu können.

Die US 2014 / 0 217 169 A1 offenbart einen Geldautomaten mit einer Kartenleseeinrichtung für Bankkarten mit Magnetstreifen. Die Kartenleseeinrichtung ist mit einer Verschlussklappe (shutter) versehen, die nur dann geöffnet wird, wenn mittels einer Sensorik festgestellt wird, dass sich die Bankkarte mit ihrem Magnetstreifen sich in einer richtigen Position bzw. Orientierung zum Kartenleser befindet, nämlich in der sog. LEF-Position (long edge first), bei der die Längsseite der Bankkarte zum Schlitz der Kartenleseeinrichtung hin orientiert ist, und nicht in einer SEF-Position (short edge first).

Die US 6,491,216 B1 offenbart einen Geldautomaten mit einer Kartenleseeinrichtung, bei dem mittels Profilsensoren die beim Einführen der Bankkarte deren vordere Kante erkannt wird, um zu verhindern, dass Fremdobjekte in den Schlitz der Kartenleseeinrichtung eingeführt werden.

Des Weiteren sind Skimmingversuche bekannt, bei denen vor dem Kartenschlitz ein fremder Kartenleser als möglichst unauffälliger Überbau angebracht ist, der z.B. per Funk die ausgelesenen Kartendaten an den Betrüger weiterleitet. Wenn es dem Betrüger darüber hinaus gelingt, die zur Bankkarte gehörige Geheimzahl (die sogenannte PIN) auszuspähen, kann er mit der gefälschten Bankkarte und der ausgespähten PIN mühelos an Geldautomaten Geld von dem zugehörigen Konto abheben. Es gibt sogar Skimmingangriffe, welche versuchen, direkt über die interne Schnittstelle einen Kartelesevorgang zu simulieren und die Softwaresteuerung des SB-Terminals bzw. Geldautomaten zu manipulieren.

Darüber hinaus ist das Ergattern der Geldkarte (Card Trapping) ein bekanntes Angriffszenario. Beim card trapping wird ein Vorbau zum Stehlen der Karte vor den Kartenleser montiert. Dieser Vorbau ist zum Kartenleser hin mit einer Schlaufe versehen, direkt hinter dem Kartenschlitz des Vorbaus ist zudem eine Klappe, die nur eine unidirektionales Einführen der Karte ermöglicht. Wenn ein Kunde seine Karte einführt, wird selbige durch die Schlaufe erfasst und gefangen; die Klappe verhindert einen Auswurf der Karte. Dem Gerätenutzer wird durch das Verhalten des Gerätes ein Einzug der Karte vermittelt. Er verlässt das Selbstbedienungsgerät. Folgend entnimmt der Dieb die Karte einschließlich Vorbau.

Um Card Trapping zu detektieren, wird nach dem Stand der Technik der Ablauf beim Karteneinzug verändert. Die Karte wird eingezogen, dann erst noch einmal wieder herausgefahren und erst folgend abschließend wieder vom Kartenleser eingezogen. Ist dieser Ablauf nicht einwandfrei möglich, d.h. das Ausgeben der Karte funktioniert nicht, ist davon auszugehen, dass es sich hierbei um den Versuch des Erlangens der Geldkarte handelt. Diese Sicherheitsroutine erhöht die Transaktionszeit am Gerät.

Auch ist allgemein bekannt, Manipulationsversuchen an SB-Terminals durch den Einsatz von Sensorik entgegenzuwirken. So offenbart die DE 196 05 102 A1, zur Absicherung eines SB-Terminals ein oder mehrere Infrarot-Sensoren einzusetzen, deren Signale von einer Auswertevorrichtung verarbeitet werden, um Überbauten zu erkennen.

In der DE 10 2008 012 231 A1 wird eine Schutzvorrichtung vorgeschlagen, die einen Schutzfeld-Generator und eine damit verbundene Induktivität zum Erzeugen eines elektromagnetischen Schutzfeldes aufweist, welches die beim Kartenlesen erzeugten elektromagnetischen Felder überdeckt und somit die Funktion des fremden Kartenlesers (Ausspähvorrichtung) beeinträchtigt, so dass dieser keine brauchbaren Daten mehr liefern kann. Damit der Betrüger die Schutzvorrichtung nicht bemerkt, wird das elektromagnetische Schutzfeld mit einem speziellen Schutzsignal erzeugt, das ein normales Kartenlese-Signal simuliert, wobei das Signal nur unbrauchbare Pseudo-Daten enthält, die der Betrüger nicht verwerten kann. Jedoch ist die Schutzvorrichtung nicht geeignet, Skimming-Versuche zu verhindern oder zu erschweren, welche direkt im Innern der Kartenleseeinrichtung ansetzen und z.B. Signale von einer dort eingeführten Ausspähvorrichtung empfangen oder sogar von einer internen geräteeigenen Datenschnittstelle abgreifen.

In diesem Zusammenhang kann auch die DE 10 2009 019 708 A1 genannt werden, die vorschlägt, ein Störfeld mittels Permanentmagneten zu erzeugen, welche über Piezoelemente mechanisch bewegt werden, so dass sich ein magnetisches Wechselfeld ausbildet, das den Skimming-Kartenleser beim Auslesen von Karten effektiv stört. Des Weiteren ist die EP 1 394 728 A1 zu nennen, bei der mittels Einsatz von Ultraschall-Sensoren erkannt wird, ob an dem SB-Terminal Überbauten angebracht sind. Auch diese Lösungen sind nicht geeignet, Skimming-Versuche zu verhindern oder zu erschweren, die direkt im Innern der Kartenleseeinrichtung ansetzen.

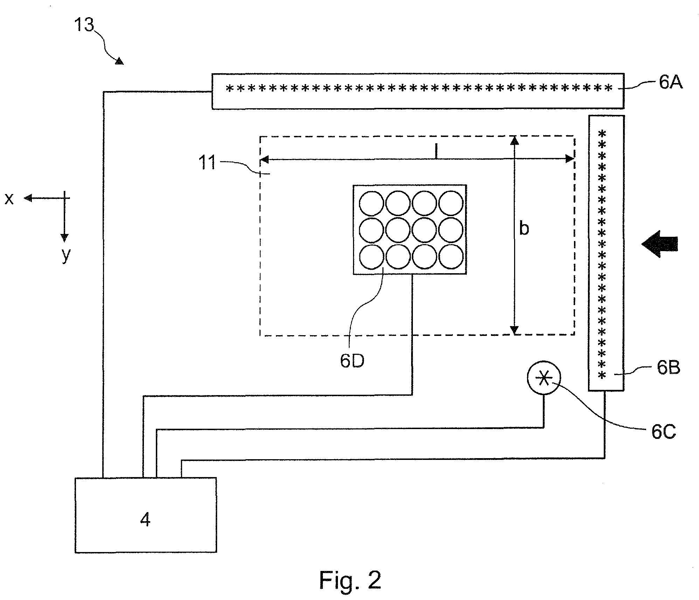

In der US 2006/0249574 A1 wird zwar der Missbrauch von Karten behandelt, nicht aber ein Eingriff in das Innere des Kartenlesers an sich. Vielmehr wird dort vorgeschlagen, die Karte selbst mit einem Mikrokontroller und Verschlüsselungsfunktion zu versehen (s. dort Fig. 2). Zur Stromversorgung des Mikrokontrollers sollen photovoltaische oder piezoelektrische Bauelemente verwendet werden. Eine Überwachung oder Abwehr von Skimming-Versuchen mittels Sensorik wird dort nicht beschrieben.

Des Weiteren ist bei Vorrichtungen, die zur Aufbewahrung von Geldmitteln oder Wertgegenständen dienen, insbesondere bei Tresoren oder Banksafes, bekannt, diese vor Fremdeingriffe durch Einsatz von Sensorik zu schützen. So wird z.B. in der DE 2 318 478 A1 eine Überwachungsanlage für einen Tresorraum offenbart, bei der Ultraschall-Sensoren eingesetzt werden, um anhand des Doppler-Effekts Bewegungen im Tresorraum zu erkennen, die auf einen Einbruch hinweisen. Eine weitere nach demselben Prinzip arbeitende Ultraschall-Alarmanlage wird in der DE 2 617 467 A1 offenbart.

Demnach sind die herkömmlichen Selbstbedienungsterminals mit einer Kartenleseeinrichtung ausgestattet, in die eine Karte einführbar ist, auf welcher zu lesende Daten gespeichert sind, wobei zur Abwehr von Manipulationsversuchen das Selbstbedienungsterminal an sich mit mindestens einer Sensorik und einer damit verbundenen Auswertevorrichtung ausgestattet sein kann. Diese Lösungen sind jedoch nicht zur effektiven Abwehr von Manipulationsversuchen geeignet, die auf das Innere der Kartenleseeinrichtung abzielen.

Daher ist es Aufgabe der vorliegenden Erfindung ein Selbstbedienungsterminal mit einer Kartenleseeinrichtung der eingangs genannten Art weiterzuentwickeln, so dass auch Manipulationsversuche und Skimmingangriffe, die auf das Innere der Kartenleseeinrichtung abzielen, sicher abgewehrt oder zumindest effektiv erschwert werden. Auch soll ein Verfahren zur Überwachung eines solchen Selbstbedienungsterminals vorgestellt werden.

### Überblick über die Erfindung:

Gelöst wird die Aufgabe durch die Merkmale der unabhängigen Ansprüche. Demnach geht die Erfindung vom nächstkommenden Stand der Technik (US 6,491,216 B1) aus, der ein Selbstbedienungsterminal mit einer Kartenleseeinrichtung offenbart, bei der die zumindest eine Sensorik in der Kartenleseeinrichtung angeordnet ist und mindestens eine sich linear erstreckende Sensoranordnung umfasst, wobei die Auswertevorrichtung mittels der mindestens einen Sensoranordnung mindestens eine räumliche Dimension der Karte anhand geometrischer Abmessungen der Länge und/oder Breite und optional auch der Dicke der Karte im Vergleich mit Standardwerten für genormte Karten überprüft. Es wird also von einer Kartenleseeinrichtung ausgegangen, bei der die zumindest eine Sensorik in der Kartenleseeinrichtung selbst angeordnet ist und vorzugsweise in oder an einem Aufnahmeraum für die zu lesende Karten angeordnet ist, wobei die Auswertevorrichtung mittels der mindestens einen Sensoranordnung mindestens eine räumliche Dimension der Karte, zumindest deren Breite und/oder Länge, überprüft. Als Sensoranaordnungen können beispielsweise opto-elektrische Sensorleisten verwendet werden.
Das Selbstbedienungsterminal nach Anspruch 1 unterscheidet sich nun vom nächstkommenden Stand der Technik (US 6,491,216 B1) dadurch, dass an einem Einzugs-Bereich für einbehaltene Karten eine Lichtschranke angeordnet ist, die mit der mindestens einen Auswertevorrichtung verbunden ist und die ein oder mehrere opto-elektrische Sensorelemente aufweist, um Manipulationen an dem Einzugs-Bereich zu erfassen. Es ist also des Weiteren vorgesehen, dass auch an einem Einzugs-Bereich, insbesondere Ablagefach (Retract-Fach), für einzuhaltende Karten eine zusätzliche Sensorik in Form einer Lichtschranke angeordnet ist, die mit der mindestens einen Auswertevorrichtung verbunden ist und die ein oder mehrere opto-elektrische Sensorelemente aufweist, um Manipulationen an dem Einzugs-Bereich zu erfassen. Die Kartenleseeinrichtung ist also so ausgebildet, dass an dem Einzugs-Bereich (sog. Retract-Bereich) für einzuhaltende Karten eine als Lichtschranke ausgebildete Sensorik angeordnet ist, die mit der mindestens einen Auswertevorrichtung verbunden ist und die ein oder mehrere Sensorelemente aufweist, um Manipulationen an dem Einzugs-Bereich zu erfassen. Diese Sensorelemente sind vorzugsweise opto-elektrische Bauelemente mit denen der Bereich überwacht werden kann.

Die Erfindung stellt auch ein Selbstbedienungsterminal, das als ein Geldautomat ausgebildet ist, mit einer solchen Kartenleseeinrichtung bereit. Außerdem wird hier ein Verfahren vorgestellt, mit dem eine Überwachung des Selbstbedienungsterminals bzw. Geldautomaten mittels der Sensorik und der Auswertevorrichtung durchgeführt wird, wobei die Sensorik in der Kartenleseeinrichtung angeordnet ist und mindestens eine sich linear erstreckende Sensoranordnung umfasst, die vorzugsweise in dem Aufnahmeraum angeordnet ist, und wobei mittels der Auswertevorrichtung und der mindestens einen Sensoranordnung zumindest eine räumliche Dimension der Karte anhand geometrischer Abmessungen der Länge und/oder Breite sowie optional auch noch der Dicke der Karte im Vergleich mit Standardwerten für genormte Karten überprüft wird.

Demzufolge wird im Innern der Kartenleseeinrichtung eine Sensorik installiert, um das dort befindliche eingeführte Objekt auf die räumlichen Dimensionen einer normalen Karte hin zu überprüfen, so dass sehr effektiv erkannt werden kann, ob sich in der Kartenleseeinrichtung tatsächlich eine normale Karte befindet oder etwa ein Fremdobjekt, wie z.B. eine Kartenähnlich-dimensionierte Ausspähvorrichtung.

Bevorzugte Ausführungsbeispiele sind den Unteransprüchen zu entnehmen.

Vorzugsweise ist die mindestens eine Sensoranordnung als eine Sensorleiste ausgebildet, die mehrere linear angeordneten Sensorelemente aufweist, wobei die Sensorleiste sich in Längsrichtung oder Querrichtung zu der eingeführten Karte erstreckt. Dabei kann eine erste Sensorleiste die Länge der Karte als erste räumliche Dimension erfassen und/oder eine zweite Sensorleiste die Breite der Karte als zweite räumliche Dimension erfassen.

Vorzugsweise kann auch nur eine Sensorleiste eingesetzt werden, um Breite und Länge zu erfassen bzw. zu überprüfen. Beispielsweise ist die zweite Sensorleiste so ausgebildet, dass die nicht nur die Breite der Karte erfasst, sondern auch die Länge der Karte erfasst, indem die zweite Sensorleiste beim Einschubvorgang der Karte deren Anfang und Ende erkennt und indem die Auswertevorrichtung mittels einer Zeitmessung und anhand einer vorgegeben Einschubgeschwindigkeit die Länge der Karte ermittelt.

Somit ist die jeweilige in der Kartenleseeinrichtung installierte Sensoranordnung vorzugsweise als eine Sensorleiste mit mehreren linear angeordneten Sensorelementen ausgebildet, die sich in Längsrichtung oder Querrichtung der in den Aufnahmeraum eingeführten Karte erstreckt. Dabei erfasst vorzugsweise eine erste Sensorleiste die Länge der Karte als erste räumliche Dimension und/oder erfasst eine zweite Sensorleiste die Breite der Karte als zweite räumliche Dimension. Zusätzlich dazu kann in der Kartenleseeinrichtung eine erste zusätzliche Sensorik angeordnet sein, welche die Dicke der Karte als dritte Dimension erfasst (im Weiteren auch "Höhe der Karte" genannt). Vorzugsweise sind die Sensorelemente der mindestens einen Sensoranordnung und/oder der ersten zusätzlichen Sensorik als opto-elektrische Sensorelemente ausgebildet. Alternativ können aber auch andere Sensortypen eingesetzt werden, mit denen die räumlichen Karten-Dimensionen erfasst werden können.

Außerdem kann in der Kartenleseeinrichtung eine weitere zusätzliche Sensorik vorgesehen sein, insbesondere opto-elektrische Sensorik, die in Nähe der Oberfläche der Karte angeordnet ist, um Material-Eigenschaften der Karte zu prüfen, insbesondere durch diskrete Spektroskopie.

Die Kartenleseeinrichtung, die üblicherweise ein Gehäuse und/oder einen Aufnahmeraum aufweist, in das/den die Karte einziehbar ist, kann so ausgebildet sein, dass die mindestens eine Auswertevorrichtung mit mechatronischen Wandlern, insbesondere Piezo-elektrischen Wandlern, umfassend Sensoren und/oder Aktoren verbunden ist, wobei die mechatronischen Wandler so in oder an dem Gehäuse und/oder Aufnahmeraum angeordnet sind, dass die Integrität der Kartenleseeinrichtung, insbesondere des Gehäuses und/oder Aufnahmeraums, prüfbar ist, wobei die Auswertevorrichtung eingerichtet ist, um von den mechatronischen Wandlern ein Signal zu empfangen, das von einem Teil der mechatronischen Wandler angeregt ist und von einem Teil der mechatronischen Wandler detektiert wird, um dieses mit Referenzdaten zu vergleichen, und um bei einer definierten Abweichung ein Warnsignal auszugeben, das für eine fehlende Integrität der Kartenleseeinrichtung steht. Es können also in oder an dem Aufnahmeraum der Kartenleseeinrichtung mechatronische Wandler vorgesehen sein, insbesondere Piezo-elektrische Wandler, umfassend Sensoren und/oder Aktoren, die mit einer Auswertevorrichtung verbunden sind. Diese Wandler sollen dazu dienen, eine Schwingung, vorzugsweise im hörbaren Schallbereich bzw. Eigenfrequenzbereich, auf die Kartenleseeinrichtung auszuüben, um die Integrität der Kartenleseeinrichtung, insbesondere des Gehäuses und/oder Aufnahmeraums, zu überprüfen. Dazu verwaltet die Auswertevorrichtung z.B. Referenzdaten von den mechatronischen Wandlern, die einen zulässigen Zustand des Aufnahmeraums repräsentieren. Die mechatronischen Wandler können auch in einem Sensorfeld (patch) angeordnet sein, Dabei umfasst das Sensorfeld vorzugsweise mehrere schall-elektrische, insbesondere mehrere piezo-elektrische Sensorelemente. Ein solches Sensorfeld könnte auch in oder an dem Aufnahmeraum der Kartenleseeinrichtung befestigt werden, vorzugsweise parallel zu einer Oberfläche der Karte, um auch auf diesem Weg die Material-Eigenschaften der Karte zu prüfen. Dabei können einzelne Elemente des Sensorfeldes als Aktoren, insbesondere piezo-elektrische Aktoren, fungieren, die den Bereich der Kartenleseeinrichtung zum Schwingen anregen, so dass von den anderen Sensorelementen des Sensorfeldes die auszuwertenden Signale erzeugt werden. Demnach könnte die Auswertevorrichtung so erweitert werden, dass sie nicht nur die Signale von den opto-elektrischen Sensorleisten auswerte, sondern auch die Signale die von anderen Sensorelementen, insbesondere von den Sensorelementen des mechatronischen Sensorfeldes, kommen.

### Figurenbeschreibung:

Nachfolgend wird die Erfindung im Detail anhand von Ausführungsbeispielen und unter Bezugnahme auf die beiliegenden Zeichnungen beschrieben, die folgende schematische Darstellungen wiedergeben:
- Fig. 1a: zeigt den Aufbau der Kartenleseeinrichtung in einer Querschnittansicht
- Fig. 1b: ;zeigt in einer dreidimensionalen Ansicht den Aufbau einer Kartenleseeinrichtung zum Einbau in ein Selbstbedienungsterminal;
- Fig. 2: zeigt in einer schematischen Darstellung die Anordnung von Sensorleisten zum Prüfen der Dimensionen (Länge, Breite, Höhe) einer Karte;
- Fig. 3, 5: zeigen Diagramme für eine Signal-Vorverarbeitung, die als Schrittfolge innerhalb des Verfahrens durchgeführt wird;
- Fig. 4a-c: veranschaulichen die logischen Zusammenhänge zwischen den durchgeführten Verfahrensschritten; a= Karteneinschub, b= Retract c=Prüfung der Hüllenintegrität
- Fig. 6a&b: veranschaulichen die mittels des Verfahrens durchgeführte Merkmalsextraktion und Klassifikation;
- Fig. 7: ist eine schematische Darstellung, die die Funktion eines für die Klassifikation verwendeten lernfähigen Klassifikators veranschaulicht;
- Fig. 8: veranschaulicht die Funktion eines Fuzzy-Pattern-Klassifikators; und
- Fig. 9: stellt den Ablauf eines beispielhaft ausgeführten Verfahrens dar.

### Detaillierte Beschreibung in Bezug auf die Figuren:

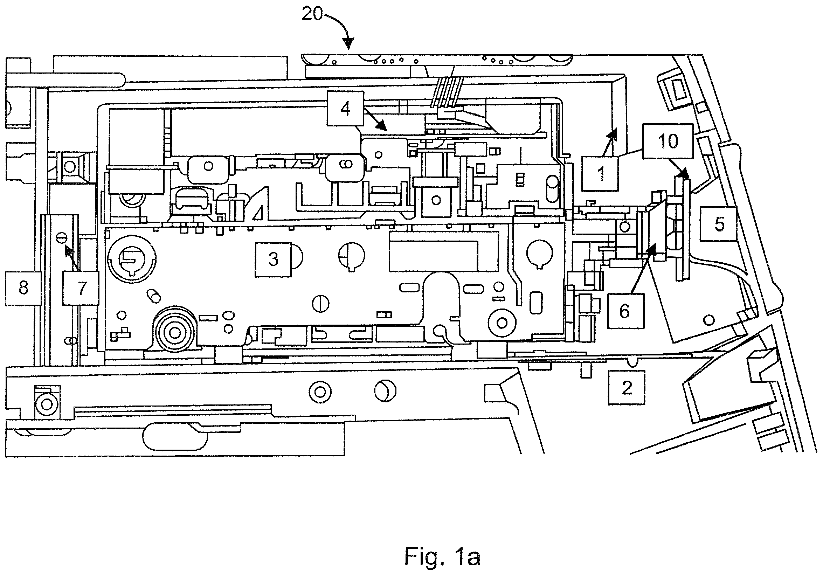

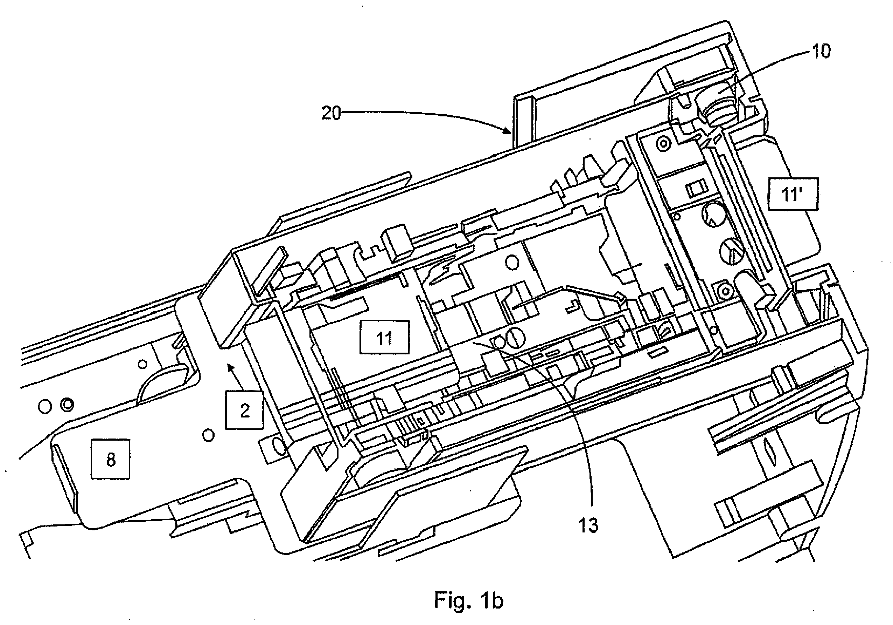

In den Figuren 1a und 1b ist in schematischer Weise der Aufbau einer Kartenleseeinrichtung 20 dargestellt, die im Inneren einen Aufnahmeraum 13 für eine zu lesende Karte 11 aufweist. Der Aufnahmeraum 13 umfasst auch den eigentlichen Kartenleser 3 bzw. Kartenleseelemente, die beispielsweise eine Kontaktstation zum Auslesen von Karten-Chips und einen Lesekopf zum Auslesen von Magnetstreifen umfassen. Die auszulesende Karte 11 bzw.11' wird in an sich bekannter Weise über Transportmittel von dem Einführschlitz in den Aufnahmeraum 13 transportiert, um dort optimal zu den Kartenleseelementen für den Auslesevorgang positioniert zu werden. Hierfür können übliche Führungs- und Anschlagelemente vorgesehen werden.

Unter dem Begriff Kartenleseeinrichtung wird hier die Gesamtanordnung (s. Fig. 1b) verstanden, welche u.a. das Gehäuse 1, Grundplatte 2, Kartenleser 3, ggf. sog. IDKG-Einsatz 5, additive Sensoren 6, insbes. Lichtschranke(n) bzw. Sensorleiste(n), optionaler Kamera 10 und Karten-Transportmittel umfassen kann. Je nach Ausstattung können auch weniger Komponenten verbaut sein. Unter Kartenleser wird hier im Wesentlichen die Vorrichtung 3 verstanden, welche für das eigentliche Auslesen der Kartendaten vorgesehen ist. Das Gehäuse 1 umschließt in Verbindung mit der Grundplatte 2 den Karenleser 3 vollständig. Vorzugsweise sind die Wandlerelemente (mechatronische Wandler) am/im Gehäuse 1 angebracht.; grundsätzlich ist die Anordnung aber auch an allen anderen Einzelkomponenten denkbar. Hierzu ist es sinnvoll, eine Überlagerung der modalen Dehnungen in den zu betrachtenden Frequenzbereichen vorzunehmen. Signifikante und damit gut geeignete Positionen werden dadurch visualisiert. Die Wandlerpositionierung kann vorgenommen werden.

Einzige Öffnungen des Gehäuses sind die Öffnung für Karteneinschub (IDKG-Einsatz 5) und der damit verbundenen Detektion durch die additiven Sensoren 6 sowie der Durchbruch für eingezogene Karten, welche durch eine Lichtschranke7 überwacht wird.

Wie insbesondere die Fig. 1b zeigt, weist die Kartenleseeinrichtung 20 in ihrem hinterem Teil auch einen Bereich 8 auf, der für das Einbehalten von Karten 11 vorgesehen ist, die aufgrund von nicht erfüllten Bedingungen von dem SB-Terminal nicht wieder an den Benutzer zurückgegeben werden sollen. Die Ablage 8, die auch als Retract-Bereich bezeichnet wird, befindet sich am Ende der Transportbahn, d.h. hinter dem Aufnahmeraum 13, in dem die jeweilige Karte ausgelesen wird. Nach dem Auslesen bzw. Ausleseversuch wird eine Karte 11, die einbehalten werden soll, in den Einzugs-Bereich 8 weitertransportiert.

Die Kartenleseeinrichtung 20 ist mit der in Fig. 2 gezeigten und an dem Sensorträger 6 (der Fig. 1A) montierten Sensorik ausgestattet, mit der die räumliche Dimensionen (Länge, Breite und ggf. Höhe) der eingeführten Karte 11 exakt erfasst und überprüft werden kann. Optional ist mit dieser Sensorik eine Materialbestimmung über diskrete Spektroskopie im IR-Bereich möglich.

Die Sensorik ist so ausgebildet, dass zumindest eine Dimension erfasst werden kann, vorzugsweise Breite b und Länge 1, optional noch die Höhe der Karte. Der Sensor 6B misst insbesondere die Breite b der Karte. Dieser kann auch für die Messung der Karten-Länge 1 verwendet werden, z.B. durch eine zeitgetriggerte Erfassung an dem Sensor 6B, wobei anhand der Einzugsgeschwindigkeit / -dauer die Karten-Länge 1 ermittelt. Es können auch für jede Dimension einzelne Sensoren verwendet werden. Insbesondere können Sensorleisten eingesetzt werden, wie z.B. opto-elektrische Sensorleisten vom Typ TSL208R, die von der Firma TAOS hergestellt werden und 512 Photodioden in einem Abstand von 125 µm aufweisen. Somit kann eine sehr genaue Messung durchgeführt werden. Des Weiteren kann noch eine zusätzliche Sensorik 6C an dem Kartenleser bzw. dem Aufnahmeraum 13 angeordnet sein, um auch die Höhe der Karte (in Z-Richtung) zu messen bzw. zu überprüfen. Je nach Anwendungsfall kann es aber ausreichen, nur eine oder zwei Dimensionen, vorzugsweise Länge und/oder Breite, zu messen.

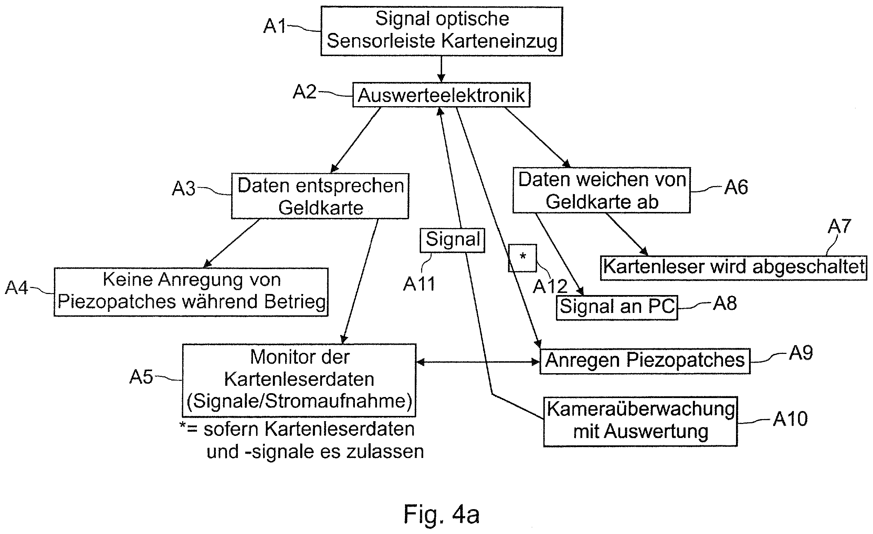

Durch die installierten Sensoriken 6A, 6B, 6C und/oder 6D (optional) sowie mit der Lichtschranke 7 in Verbindung mit dem Signal zum Retract vom Kartenleser 3 können die Durchbrüche des Gehäuses gesichert werden. Zusätzlich kann hierfür auch noch eine optional installierte Kamera 10 (s. Fig. 1b) genutzt werden. Die funktionalen Zusammenhänge werden anhand der Figuren 4a-c näher erläutert.

Zunächst wird auf die Fig. 4a Bezug genommen, die sich auf eine Prüfung der Dimensionen der eingeführten Karte 11bezieht, welche mittels der opto-elektrischen Sensorik durchfgeührt wird. 6A6B6CIn der Fig. 4a sind funktionale Blöcke A1-A12 dargestellt, die folgendes veranschaulichen:
A1: Die opto-elektrischen Sensorelemente erzeugen Messsignale für die Breite b, die Länge 1 und optional für die Höhe der Karte 11.
A2: Die Auswertevorrichtung bzw. -elektronik 4 prüft die Messdaten bzw. Messwerte, indem sie diese im Wesentlichen mit Standardwerten für genormte Bankkarten bzw. Geldkarten vergleicht.
A3: Wenn die Messdaten den Standardwerten entsprechen, handelt es sich um eine normale Geldkarte.
A4: Eine Anregen mittels des piezo-elektrischen Sensorfeldes 6D wird vorzugsweise nicht während des Betriebs des Kartenlesers durchgeführt.
A5: Jedoch wird eine Überwachung von Kartenleserdaten durchgeführt, insbesondere von den Kartenlesersignalen und/oder der Stromaufnahme des Kartenlesers.
A6. Sofern im Block A2 festgestellt wurde, dass die Messdaten von den Standardwerten abweichen, handelt es sich um keine normale Geldkarte und es wird angenommen, dass ein Manipulationsversuch vorliegt.
A7: Der Kartenleser wird abgeschaltet; wenn möglich wird die manipulierte Karte bzw. Kartenattrappe eingezogen.
A8: Die Softwaresteuerung des SB-Terminals, hier ein PC, erhält ein Warnsignal.
A9: Ein Anregen zu definierten Betriebszeitpunkten zur Feststellung der Integrität der Hülle kann durchgeführt werden
A10: Eine optionale Kameraüberwachung (s. 10 in Fig. 1a) kann Signale (Bild, Video, und/oder Audio) erzeugen.
A11: Die Kamera-Signale werden an die Auswertevorrichtung19 bzw. den PC gesendet, um den Manipulationsversuch besser zu dokumentieren und ggf. Bilder von verdächtigen Personen zwecks späterer Identifizierung aufzunehmen.
A12: ist optional und zeigt an, dass Block A9 ausgeführt wird, sofern Kartenleserdaten und -signale es zulassen.

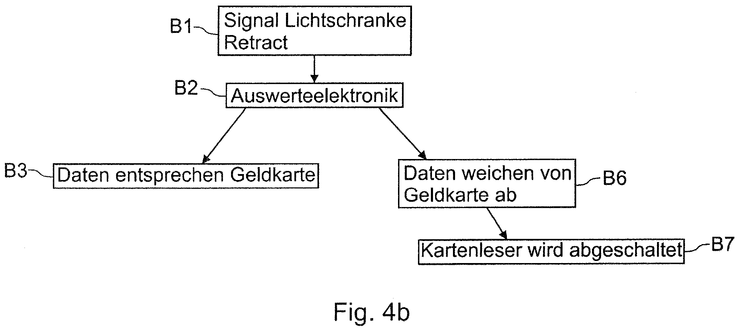

Die Fig. 4b bezieht sich auf eine Überprüfung des Retract-Bereichs mittels der dort installierten Sensorik bzw. Lichtschranke 7 (s. Fig. 1a). In der Fig. 4b sind funktionale Blöcke B1-B12 dargestellt, die folgendes veranschaulichen:
B1: Die opto-elektrische Sensorik bzw. Lichtschranke 7 am Retract-Schacht erzeugt Signale, wenn eine Karte 11 oder Attrappe bzw. ein Fremdgegenstand durch den Schacht befördert wird oder wenn von hinten durch das Fach 8 ein Fremdgegenstand in den Kartenleser 3 eingeführt werden soll.
B2: Die Auswerteelektronik gleicht das Ereignis mit dem Status des Kartenlesers ab, d.h. liegt ein retract vor, ist das Ereignis als in Ordnung einzustufen. Alle anderen Ereignisse werden als Manipulation bewertet
B3: Anhand der Signale bzw. Messwerte wird festgestellt, dass eine normale Geldkarte durch den Retract-Schacht 7 geführt wird bzw. dass ein normaler Retract-Vorgang stattfindet.
B6: Sofern im Block B2 festgestellt wurde, dass keine normale Geldkarte durch den Retract-Schacht 7 geführt wurde bzw. dass kein normaler Retract-Vorgang erfolgte, wird ein Manipulationsversuch angenommen.
B7: Der Kartenleser wird abgeschaltet.

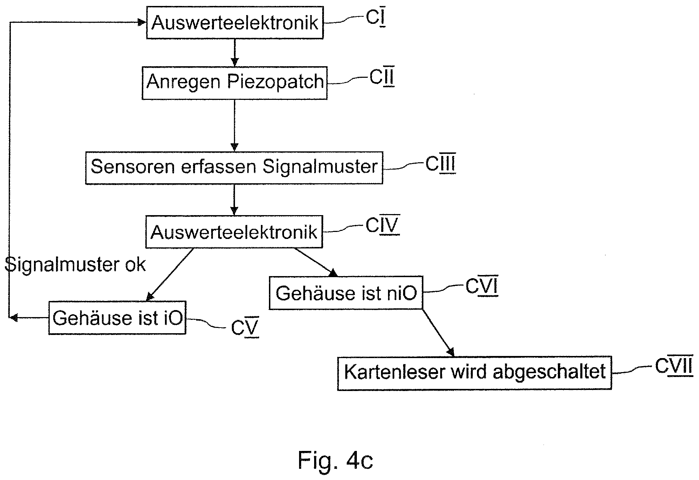

Die Fig. 4c bezieht sich auf eine Überprüfung der Integrität der Lesereinheit. Der in Fig. 4c anhand der Blöcke CI-CVII dargestellte funktionale Zusammenhang bezieht sich jedoch auf die Material-Prüfung des SB-Terminal-Gehäuses, um festzustellen, ob hieran manipuliert worden ist. In Fig. 4c wird auf die Überprüfung des Gehäuses (s. auch 1 in Fig. 1b) Bezug genommen:
CI: Die Auswertevorrichtung 4 veranlasst eine Überprüfung des Gehäuses, indem piezoelektrische Aktoren, die am Gehäuse montiert sind, zum Schwingen anregt werden, und indem Messdaten von dort montierten piezo-elektrischen Sensorfeldern ausgewertet werden. Die Aktoren können in den Sensorfeldern (vergleichbar mit 6D in Fig. 1b) integriert sein bzw. einzelne Piezo-Elemente des jeweiligen Feldes sein, welche zur Schwingungsanregung angesteuert werden.
CII: Zuerst werden die piezo-elektrischen Aktoren mit bestimmten Frequenzen bzw. mittels Sweep angeregt.
CIII: Die Sensoren erfassen Signalmuster.
CIV: Die Auswertevorrichtung wertet gemäß dem hier beschriebenen Verfahren aus.
CV: Die Integrität des Gehäuses ist vorhanden, dann beginnt der Zyklus von vorn bei CI.
CVI: Die Integrität des Gehäuses ist nicht vorhanden, dann wird der Leser abgeschaltet.
CVII: Der Kartenleser wird abgeschaltet; ggf. sogar das ganze SB-Terminal.

Die Überprüfung des Gehäuses kann auch Teil des hier offenbarten Verfahrens sein, kann aber auch als eigenständige Lösung ausgeführt werden. Bei dieser eigenständigen Lösung handelt es sich darum, dass in oder an der Kartenleseeinrichtung mechatronische Wandler installiert sind, insbesondere Piezo-elektrische Wandler, umfassend Sensoren und/oder Aktoren, die mit einer Auswertevorrichtung verbunden sind. Diese Wandler sollen dazu dienen, eine Schwingung, vorzugsweise im hörbaren Schallbereich bzw. Eigenfrequenzbereich, auf die Kartenleseeinrichtung, insbesondere dessen Gehäuse auszuüben. Die mechatronischen Wandler sind dabei so in, um oder an der Kartenleseeinrichtung bzw. dem Gehäuse angeordnet sind, dass die Integrität der Kartenleseeinrichtung, insbesondere des Gehäuses, prüfbar ist, wobei die Auswertevorrichtung eingerichtet ist, um von den mechatronischen Wandlern ein Signal zu empfangen, das von einem Teil der mechatronischen Wandler angeregt ist und von einem Teil der mechatronischen Wandler detektiert wird, um dieses mit Referenzdaten zu vergleichen, und um bei einer definierten Abweichung ein Warnsignal auszugeben, das für eine fehlende Integrität der Kartenleseeinrichtung steht.

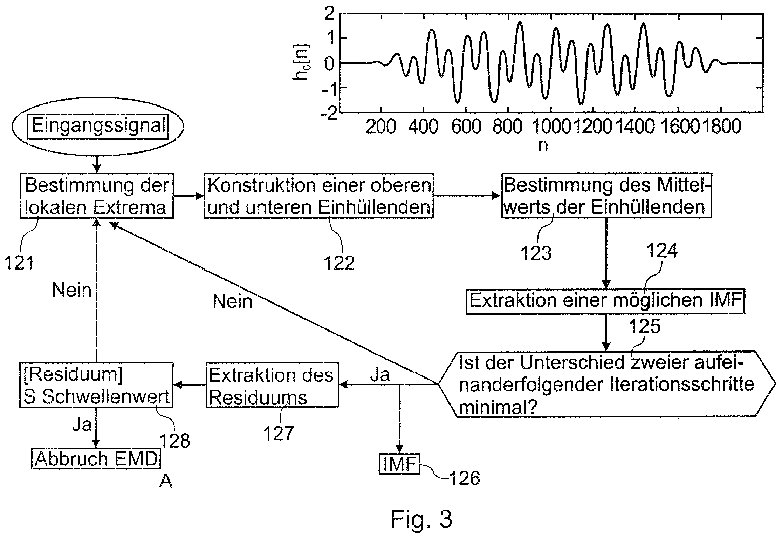

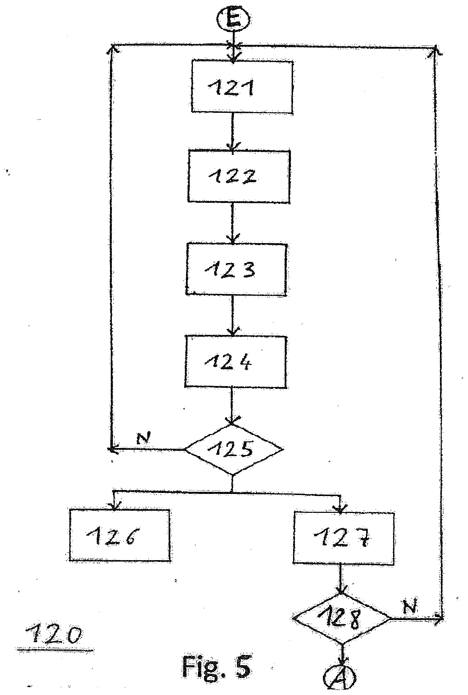

Nachfolgend wird die Überprüfung des Karten-Materials mittels des im Kartenleser installierten piezo-elektrischen oder optischen Sensorfeldes 6D (s. Fig. 2) im Detail beschrieben. Auch diese Überprüfung kann als eigenständige Lösung ausgeführt werden, wird aber hier als Teil des offenbarten Verfahrens unter Bezugnahme auf die Fig. 2 sowie Fig. 5-9 beschrieben:
Zur Überprüfung der Integrität des Gehäuses 1, der Kartenleseeinrichtung, des Karten-Materials und/oder des Aufnahmeraums für die Karte 11 werden die von dem/den Sensorfeld(ern) 6D kommenden Messsignale in der Auswertevorrichtung 4 zunächst einer Signalvorbereitung unterzogen. Dies geschieht in der Schrittfolge mit den Schritten 121-128 und wird anhand der Figuren 3 und 5 näher beschrieben:
Für das jeweils erfasste Eingangssignal (Anfangs- bzw. Einstiegspunkt E) werden zuerst in einem Schritt 121 die lokalen Extrema bestimmt, d.h. die im zeitlichen Signalverlauf auftretenden absoluten sowie relativen Maxima und Minima der Amplitude. Dann wird in einem Schritt 122 eine obere und untere Einhüllende konstruiert, d.h. eine obere Kurve, welche die Maxima verbindet und eine untere Kurve, welche die Minima verbindet. Dann wird in einem Schritt 123 der Mittelwert der Einhüllenden gebildet, vorzugsweise der arithmetische (oder ein alternativer) Mittelwert. In einem weiteren Schritt 124 erfolgt dann eine Extraktion einer möglichen intrinsischen Modalfunktion (auch kurz "IMF" genannt). Die Schritte 121-124 werden in Iterationen durchgeführt, wobei dann im Schritt 125 geprüft wird, ob und wie stark der Unterschied zweier aufeinanderfolgender Iterationsschritte ist, d.h. ob und wie stark die beiden IMFs voneinander abweichen.

Ist der Unterschied größer als ein vorgebbares Maß, so wird die nächste Iteration durchgeführt (Schritte 121-124). Andernfalls kann die (zuletzt) ermittelte IMF verwendet werden (Schritt 126). Außerdem wird dann im Schritt 127 das Residuum extrahiert und anschließend im Schritt 128 mit einem Schwellenwert verglichen. Ist das Residuum größer als der Schwellenwert, so wird die nächste Iteration durchgeführt (Schritte 121-124). Andernfalls kann der Vorgang abgebrochen werden (Endpunkt A = "Abbruch"). In diesem Fall wird die im Schritt 126 als geeignet befundene IMF weiterverwendet.

Der in Fig. 3 und 5 dargestellte Ablauf stellt eine empirische Moden-Zerlegung (Englisch: Empirical Mode Decomposition, kurz "EMD") dar, mittels der die piezo-elektrisch erfassten Sensor-Signale vorverarbeitet werden, um schließlich eine oder mehrere geeignete IMFs zu erhalten, die insbesondere für Material-Eigenschaften der untersuchten Karte charakteristisch sind. Die durchgeführte EMD entspricht einem iterativen Siebungsprozess bzw. Glättungsprozess, durch den, lokal betrachtet, in jedem Schritt die höchsten Frequenzkomponenten gewonnen werden. Damit können höherfrequente Superpositionen eliminiert werden bzw. Amplituden effektiv geglättet werden. Mit Hilfe der EMD werden charakteristische Merkmale in einem mehrdimensionalen Merkmalsraum gewonnen, welche eine effektive und zuverlässige Klassifikation ermöglichen.

Die in der Schrittfolge 120 erhaltenen Daten der IMFs können weiteren Verfahrensschritten unterzogen werden, einschließlich einer Klassifikation, welche schließlich eine fundierte Entscheidung ermöglicht, ob eine manipulierte Karte oder gar ein Fremdkörper in den Kartenleser eingeführt wurde oder nicht.

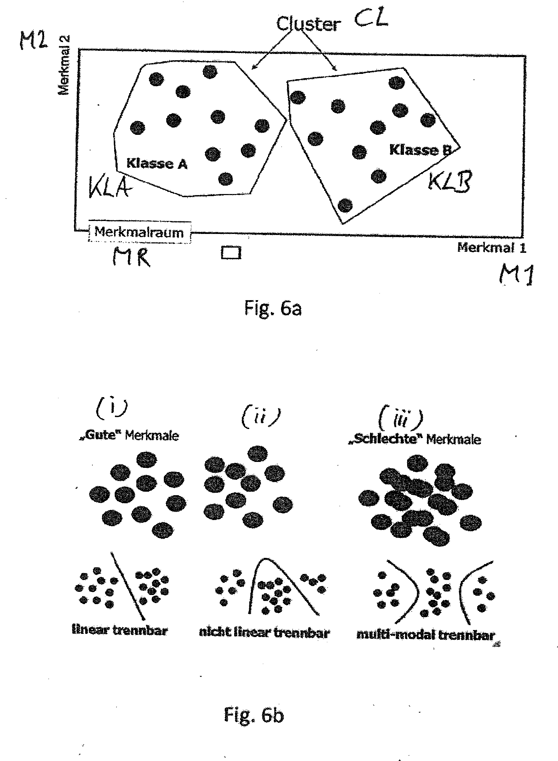

Zunächst sei angemerkt, dass bei der Verwendung der durch die IMFs repräsentierten Merkmale grundsätzlich folgendes beachtet wird:
∘ Merkmale dienen der Unterscheidung von Zuständen.
∘ Merkmale sollten (wie hier) aus den vermuteten Objekteigenschaften abgeleitet werden.
∘ Merkmale sollen voneinander unabhängig sein (s. in Fig. 6b Fälle (i) und (iii)).
∘ Objekte der gleichen Klasse sollten im Merkmalsraum an ähnlichen Orten zu finden sein (s. Häufungspunkte bzw. Cluster wie in Fig. 6a veranschaulicht).
∘ Je weniger Merkmale zur Unterscheidung notwendig sind, desto effektiver wird die Entscheidung sein.
∘ Die Generierung guter Merkmale ist auf den jeweiligen Anwendungsfall hin zu konzeptionieren.

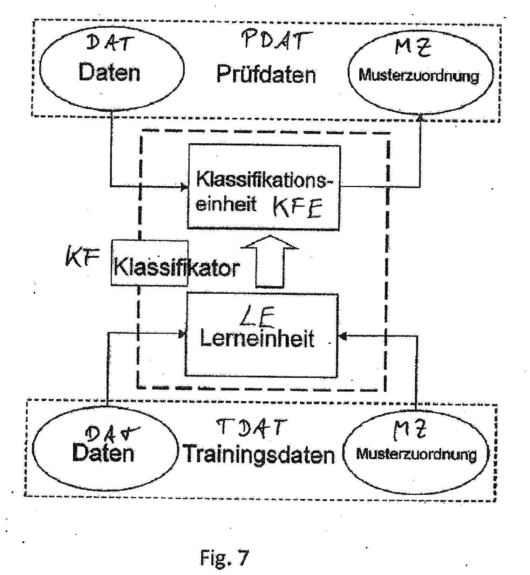

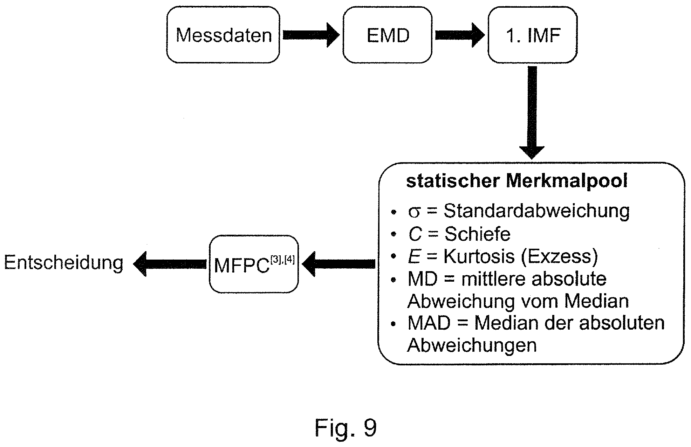

Die gewonnenen IMFs repräsentieren im Wesentlichen einen statistischen Merkmalspool (s. auch Fig. 9), der insbesondere durch folgende Parameter bzw. Kenndaten der jeweiligen IMF charakterisiert ist, nämlich durch die Standardabweichung σ, die Schiefe *C*, die Kurtosis (Exzess) *E*, die mittlere absolute Abweichung vom Median MD sowie durch den Median MAD der absoluten Abweichungen. Diese und ggf. weitere Kenndaten sind besonders geeignet für eine Klassifikation mittels eines modifizierten Fuzzy-Muster-Klassifikators (Englisch: Modified Fuzzy-Pattern Classifier, kurz "MFPC), der nachfolgend anhand der Fig. 7-9 beschrieben wird:
Zuvor sei erwähnt, dass die aus der Signal-Vorverarbeitung (Schritt 120 in Fig. 5) gewonnene IMF optional einer Segmentierung und anschließenden Merkmalsextraktion unterworfen werden kann. Auf diese Verfahrens-Schritte wird aber nicht näher eingegangen, da die Klassifikation hier im Vordergrund steht.

Zur Klassifikation wird eine Klassifikationseinheit KFE (s. Fig. 7) eingesetzt, die anhand eines erlernten Klassifikators KF die Daten DAT (hier die Kenndaten der jeweiligen IMF) als Prüfdaten PDAT behandelt und einer Musterordnung MZ unterzieht. Der Klassifikators KF ist dabei nicht statisch, sondern wird mittels einer Lerneinheit LE erlernt bzw. optimiert. Das geschieht, indem die Daten DAT als Trainingsdaten TDAT behandelt und einer Musterordnung MZ unterzogen werden. Der optimierte Klassifikation KF wird dann auf die Klassifikation der echten Messdaten (Prüfdaten PDAT) angewendet.

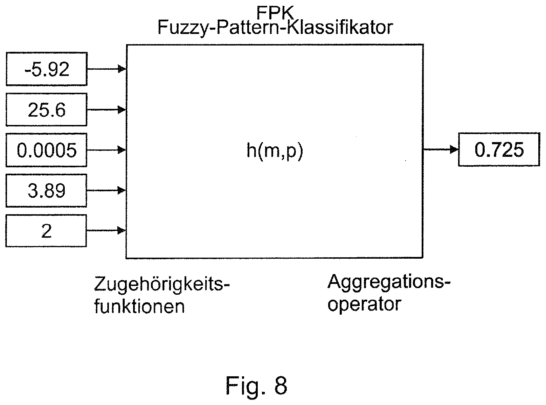

Wie die Fig. 8 veranschaulicht, wird der Klassifikator als Fuzzy-Pattern-Klassifikator FPK konditioniert, der somit eine Fuzzy-Pattern-Klassifikation ermöglicht. Eine solche Klassifikation beschreibt die problemangepasste Bewertung und Zuordnung von Daten im Rahmen gradueller Zugehörigkeiten (Zugehörigkeitsfunktionen µ(x)), welche messorientiert miteinander verkoppelt werden (Aggregation). Durch Expertenwissen und in Trainingsphasen (s. Fig. 7) können Zugehörigkeitsfunktionen anhand von Messungen erstellt werden. Die Fuzzy-Pattern-Klassifikation geht von der Unsicherheit der aus Einzelbeobachtungen gebildeten Klassen aus und bedient sich des Konzeptes der Zugehörigkeitsfunktion. Die Zugehörigkeitsfunktion µKL: X → [0,1] weist jedem Objekt x der Merkmalsmenge X eine Zahl aus dem reellwertigen Intervall [0,1] zu, welche den Zugehörigkeitsgrad µKL(x) des Objekts zur so definierten unscharfen Menge (Klasse) KL angibt. Außerdem wird von der Unsicherheit jeder Einzelbeobachtung oder jedes Objektes durch methodische Probleme, Messfehler u. ä. ausgegangen. Diese Unsicherheit wird durch Zuweisung einer elementaren Unschärfe zu jedem Objekt ausgedrückt. Für weitere Details wird auf die Literatur verwiesen.

Als Eingabe für die in Fig. 7 dargestellte Fuzzy-Pattern-Klassifikation werden die statistischen Merkmale verwendet wir sie in Figur 9 dargestellt werden.

Die extrahierten Merkmale umfassen z.B. Standardabweichung; Schiefe, Kurtosis, mittlere absolute Abweichung vom Median; Median der absoluten Abweichung. Die Standardabweichung ist ein Maß für die Streuung der Werte einer Zufallsvariablen um ihren Erwartungswert. Die Schiefe ist eine statistische Kennzahl, die die Art und Stärke der Asymmetrie einer Wahrscheinlichkeitsverteilung beschreibt. Sie zeigt an, ob und wie stark die Verteilung nach rechts (positive Schiefe) oder nach links (negative Schiefe) geneigt ist. Die Kurtosis ist eine Maßzahl für die Steilheit bzw. "Spitzigkeit" einer (eingipfligen) Wahrscheinlichkeitsfunktion, statistischen Dichtefunktion oder Häufigkeitsverteilung. Die Wölbung ist das zentrale Moment 4. Ordnung. Verteilungen mit geringer Wölbung streuen relativ gleichmäßig; bei Verteilungen mit hoher Wölbung resultiert die Streuung mehr aus extremen, aber seltenen Ereignissen.

Der Median oder Zentralwert ist ein Mittelwert für Verteilungen in der Statistik. Der Median einer Auflistung von Zahlenwerten ist der Wert, der an der mittleren Stelle steht, wenn man die Werte der Größe nach sortiert. Unter mittlere absolute Abweichung vom Median versteht man die Streuung um den Median. Unter Streuung (auch Dispersion oder mittlere absolute Abweichung) fasst man in der deskriptiven Statistik und in der Stochastik verschiedene Maßzahlen zusammen, die die Streubreite von Werten einer Häufigkeitsverteilung oder Wahrscheinlichkeitsverteilung um einen geeigneten Lageparameter herum beschreiben. Die verschiedenen Berechnungs-methoden unterscheiden sich prinzipiell durch ihre Beeinflussbarkeit beziehungsweise Empfindlichkeit gegenüber Ausreißern. Die Streuung der Häufigkeitsverteilung wird als Standardfehler bezeichnet.

Die Methode bedient sich für die Klassenbeschreibung eines speziellen Verfahrens des überwachten Lernens (supervised learning) aus strukturierten, unscharfen Beispielobjekten, d. h. aus Objekten, denen durch einen "Lehrer" oder "Experten" ein Zugehören zu einer Klasse zugewiesen wurde. Sowohl die elementare Unschärfe der Objekte als auch die Unschärfe der Klassen wird durch ein einheitliches parametrisches Modell einer unimodalen, asymmetrischen Potentialfunktion nach Aizerman ausgedrückt.

Zusammenfassend und unter Bezugnahme auf alle Figuren 1-9 kann zu der Integration des erfindungsgemäßen Verfahrens in ein SB-Terminal folgendes gesagt werden:
Neben der Installation von der opto-elektrischen Sensorik zur Prüfung der Karten-Dimensionen (s. Sensorleisten 6A und 6B sowie Sensor 6C in Fig. 1a) und dem opto-elektrischen und/oder piezo-elektrischen Sensorfeld 6D zur Prüfung des Karten-Materials und/oder des Zustands des Aufnahmeraums, kann das Gehäuse 1 des SB-Terminals (Fig. 1b) auch mit Piezo-Patches bestückt sein, welche Manipulationen am Gehäuse selbst überwachen. Das Gehäuse kann aus Stahl und/oder Kunststoff gefertigt sein. Es bildet mit der Grundplatte 2 und dem IDKG-Einsatz 5 ein geschlossenes Gehäuse. Die einzigen Öffnungen sind die Kartendurchlässe für Karteneinschub und Kartenretract (Bereich 8). Die Piezo-Patches sind vorzugsweise aufgeklebt, können aber auch direkt in einem Kunststoffteil abgespritzt werden. Die Sensoren werden von der Auswerteelektronik bzw. Auswertevorrichtung 4 betrieben. Die Sensoren können aktuatorisch wie sensorisch betrieben werden. Dazu regt die Auswertevorrichtung 4 einen der Sensoren aktuatorisch mit einem definierten Muster an, die restlichen Piezo-Patches erfassen das Anregungssignal. Die Elektronik gleicht das gemessene Signal mit dem theoretischen Signal ab.

Des Weiteren ist der PC des SB-Terminals (z.B. ATM) mit der Elektronik verbunden. Die Elektronik bestromt den Kartenleser und ist auch (optional) logisch mit diesem verbunden. Ersteres dient zum definierten Ein- und Ausschalten des Kartenlesers, letzteres zur Verarbeitung von etwaigen Firmware-Signalen des Kartenlesers, wie z.B. einem Retract oder einem Karteneinzug. Sofern die Signalausgabe des Kartenlesers in dessen Firmware noch nicht implementiert ist, kann alternativ die Stromaufnahme des Kartenlesers gemessen werden und so Rückschluss auf die Betriebsart (Karteneinzug/Retract/Ausgabe/Stand-by) des Lesers führen.

Der Einschubbereich (s. Fig. 1b) führt und zentriert die Karte 11 zum Kartenleser 3. Er ist bestückt mit der besagten opto-elektrischen Sensorik, d.h. Sensor- und Lichtschrankenleiste(n), die die geometrischen Abmessungen der Karte vollständig erfasst bzw. erfassen. Mit Hilfe der mindestens einen Sensorleiste, z.B. 6B in Fig. 2, kann so zwischen einer regulären, gültigen Karte oder einem ungültigen Gegenstand, wie z.B. einer Vorrichtung zum Einbringen eines Skimmers in das Innere des Gerätes, differenziert werden. Die Signale der Sensorleiste(n) 6A und/oder 6B sowie des optionalen Sensors 6C werden von der Auswertevorrichtung 4 ausgewertet. Gleiches gilt für die Lichtschranke 7 an der Retract-Ausgabe. Hier wird jedoch nicht qualitativ die Belegung der Lichtschranke bewertet, sondern eine Informationsfusion mit dem Event bzw. Ereignis "Retract des Kartenlesers" erstellt. Darüber hinaus kann die Auswertevorrichtung 4 Signale an den PC senden, der dann wiederum durch eine Software (z.B. OSG) die optionale Überwachungskamera 10 aktiviert und die Integrität des Kartenschlitzes prüft.

### Bezugszeichenliste

- 20: Kartenleseeinrichtung für Selbstbedienungsterminal
- 1: Gehäuse mit Wandlerelementen
- 2: Grundplatte
- 3: Kartenleser
- 4: Auswerteelektronik / Auswertevorrichtung
- 5: IDKG-Einsatz
- 6: additive Sensoren auf Sensorträger für Karteneinschubüberwachung
- 7: Lichtschranke am Einzugs-Bereich (Retract-Bereich)
- 8: Ablagefach Retract-Karten / Einzugsbereich (Retract-Bereich) für einzubehaltene Karten
- 10: Kamera(s) (optional) 11 Geldkarte (EC/Master/Visa) eingeführt
- 11': Geldkarte (EC/Master/Visa) im Einführschacht
- 13: Aufnahmeraum für Karte (Bereich des Kartenlesers)
- 6A, 6B 6B: linear sich erstreckende Sensoranordnungen, hier Sensorleisten zum Prüfen der Länge 1 bzw. Breite b der Karte
- 6C: zusätzliche Sensorik zum Prüfen der Höhe der Karte
- 6D: Sensorfeld mit Piezo-elektrischen Sensorelementen zum Prüfen des Kartenmaterials
- 121-128: Schritte zur Signalvorverarbeitung
- A1-A12; B1-B7; CI-CVII: funktionale Blöcke

## Patentansprüche

1. Selbstbedienungsterminal mit einer Kartenleseeinrichtung (20),
in die eine Karte (11, 11') einführbar ist, auf der zu lesende Daten gespeichert sind,
wobei das Selbstbedienungsterminal zumindest eine Sensorik (6A, 6B) und eine damit verbundene Auswertevorrichtung (4) aufweist,
wobei die zumindest eine Sensorik in der Kartenleseeinrichtung (20) angeordnet ist und mindestens eine sich linear erstreckende Sensoranordnung (6A, 6B) umfasst,
wobei die Auswertevorrichtung (4) mittels der mindestens einen Sensoranordnung (6A, 6B) mindestens eine räumliche Dimension (l, b) der Karte (11) anhand geometrischer Abmessungen der Länge (l) und/oder Breite (b) der Karte (11) im Vergleich mit Standardwerten für genormte Karten überprüft,
**dadurch gekennzeichnet,**
**dass** im Selbstbedienungsterminal an einem Einzugs-Bereich (8) für einbehaltene Karten (11) eine Lichtschranke (7) angeordnet ist,
die mit der mindestens einen Auswertevorrichtung (4) verbunden ist und die ein oder mehrere opto-elektrische Sensorelemente aufweist,
um Manipulationen an dem Einzugs-Bereich (8) zu erfassen.

2. Selbstbedienungsterminal mit einer Kartenleseeinrichtung (20) nach Anspruch 1,
**dadurch gekennzeichnet,**
**dass** die mindestens eine Sensoranordnung als eine Sensorleiste (6A, 6B) ausgebildet ist, die mehrere linear angeordneten Sensorelemente aufweist,
wobei die Sensorleiste sich in Längsrichtung (X) oder Querrichtung (Y) zu der eingeführten Karte (11') erstreckt.

3. Selbstbedienungsterminal mit einer Kartenleseeinrichtung (20) nach Anspruch 1 oder 2,
**dadurch gekennzeichnet,**
**dass** eine erste Sensorleiste (6A) die Länge (l) der Karte (11') als erste räumliche Dimension erfasst und/oder eine zweite Sensorleiste (6B) die Breite (b) der Karte (11') als zweite räumliche Dimension erfasst.

4. Selbstbedienungsterminal mit einer Kartenleseeinrichtung (20) nach Anspruch 1 oder 2,
**dadurch gekennzeichnet,**
**dass** die Kartenleseeinrichtung (20) nur eine Sensorleiste (6B) aufweist, die nicht nur die Breite (b) der Karte (11') erfasst, sondern auch die Länge (l) der Karte (11') erfasst, indem die Sensorleiste (6B) beim Einschubvorgang der Karte (11') deren Anfang und Ende erkennt und indem die Auswertevorrichtung (4) anhand einer Zeitmessung anhand einer vorgegeben Einschubgeschwindigkeit die Länge (l) der Karte (11') ermittelt.

5. Selbstbedienungsterminal mit einer Kartenleseeinrichtung (20) nach Anspruch 3 oder 4,
**dadurch gekennzeichnet,**
**dass** in der Kartenleseeinrichtung (20) eine erste zusätzliche Sensorik (6C) angeordnet ist, die die Dicke der Karte (11') als dritte Dimension erfasst.

6. Selbstbedienungsterminal mit einer Kartenleseeinrichtung (20) nach einem der Ansprüche 2-5, **dadurch gekennzeichnet,**
**dass** die Sensorelemente der mindestens einen Sensoranordnung (6A, 6B) und/oder der ersten zusätzlichen Sensorik (6C) opto-elektrische Sensorelemente sind.

7. Selbstbedienungsterminal mit einer Kartenleseeinrichtung (20) nach einem oder mehreren der vorhergehenden Ansprüche, **dadurch gekennzeichnet,**
**dass** eine zweite zusätzliche Sensorik (6D) zur Untersuchung der Oberfläche der Karte (11') angeordnet ist, um Material-Eigenschaften der Karte (11') zu prüfen.

8. Selbstbedienungsterminal mit einer Kartenleseeinrichtung (20) nach einem oder mehreren der vorhergehenden Ansprüche, **dadurch gekennzeichnet,**
**dass** die Kartenleseeinrichtung (20) ein Gehäuse (1) und/oder einen Aufnahmeraum (13) aufweist, in das/den die Karte (11) einziehbar ist,
**dass** die mindestens eine Auswertevorrichtung (4) mit mechatronischen Wandlern , die als piezo-elektrische Sensoren und/oder Aktoren betrieben werden, verbunden ist,
wobei die mechatronischen Wandler so in oder an dem Gehäuse (1) und/oder Aufnahmeraum (13) angeordnet sind,
**dass** die Integrität der Kartenleseeinrichtung (20) prüfbar ist,
wobei die Auswertevorrichtung (4) eingerichtet ist, um von den mechatronischen Wandlern ein Signal zu empfangen,
das von einem Teil der mechatronischen Wandler angeregt ist und von einem Teil der mechatronischen Wandler detektiert wird,
um dieses mit Referenzdaten zu vergleichen, und um bei einer definierten Abweichung ein Warnsignal auszugeben, das für eine fehlende Integrität der Kartenleseeinrichtung steht.

9. Selbstbedienungsterminal mit einer Kartenleseeinrichtung (20) nach einem oder mehreren der vorhergehenden Ansprüche, **dadurch gekennzeichnet,**
**dass** das Selbstbedienungsterminal als ein Geldautomat ausgebildet ist.

10. Verfahren zur Überwachung eines Selbstbedienungsterminals,
wobei das Selbstbedienungsterminal eine Kartenleseeinrichtung (20) aufweist,
in die eine Karte (11, 11') einführbar ist, auf der zu lesende Daten gespeichert sind,
wobei das Selbstbedienungsterminal zumindest eine Sensorik (6A, 6B) und eine damit verbundene Auswertevorrichtung (4) aufweist,
wobei die zumindest eine Sensorik in der Kartenleseeinrichtung (20) angeordnet ist und mindestens eine sich linear erstreckende Sensoranordnung (6A, 6B) umfasst,
wobei mindestens eine räumliche Dimension (l, b) der Karte (11) durch die Auswertevorrichtung (4) mittels der mindestens einen Sensoranordnung (6A, 6B) anhand geometrischer Abmessungen der Länge (l) und/oder Breite (b) der Karte (11) im Vergleich mit Standardwerten für genormte Karten überprüft wird,
**dadurch gekennzeichnet, dass** im Selbstbedienungsterminal an einem Einzugs-Bereich (8) für einbehaltene Karten (11) eine Lichtschranke (7) angeordnet ist,
die mit der mindestens einen Auswertevorrichtung (4) verbunden ist
und die ein oder mehrere opto-elektrische Sensorelemente aufweist,
mittels dem/denen Manipulationen an dem Einzugs-Bereich (8) erfasst werden.

11. Verfahren nach Anspruch 10, **dadurch gekennzeichnet,**
**dass** die Kartenleseeinrichtung (20) ein Gehäuse (1) und/oder einen Aufnahmeraum (13) aufweist, in das/den die Karte (11) einziehbar ist, um ausgelesen zu werden,
und **dass** die Kartenleseeinrichtung ferner mit mechatronischen Wandlern, die als piezoelektrische Sensoren und/oder Aktoren betrieben werden, ausgestattet wird, die mit einer Auswertevorrichtung (4) verbunden sind,
wobei die mechatronischen Wandler so in oder am Gehäuse (1) angeordnet werden,
**dass** die Integrität der Kartenleseeinrichtung (20) mit Hilfe der mechatronischen Wandler geprüft wird,
wobei die Auswertevorrichtung von den mechatronischen Wandlern ein Signal empfängt, das von einem Teil der mechatronischen Wandler angeregt wird und von einem Teil der mechatronischen Wandler detektiert wird,
um das Signal mit Referenzdaten zu vergleichen, und um bei einer definierten Abweichung ein Warnsignal auszugeben, das für eine fehlende Integrität der Kartenleseeinrichtung steht.

## Claims

1. Self-service terminal comprising a card-reading device (20) into which a card (11, 11'), on which data to be read is stored, can be inserted,
wherein the self-service terminal has at least one sensor system (6A, 6B) and an evaluation apparatus (4) connected thereto,
wherein the at least one sensor system is arranged in the card-reading device (20) and comprises at least one linearly extending sensor arrangement (6A, 6B),
wherein the evaluation apparatus (4), by means of the at least one sensor arrangement (6A, 6B), checks at least one spatial dimension (1, b) of the card (11) on the basis of geometric dimensions of the length (1) and/or width (b) of the card (11) in comparison with standard values for standardized cards,
**characterized**
**in that** a light barrier (7) is arranged at a retract region (8) for withheld cards (11) in the self-service terminal, the light barrier being connected to the at least one evaluation apparatus (4) and having one or more optoelectrical sensor elements in order to detect manipulations at the retract region (8).

2. Self-service terminal comprising a card-reading device (20) according to Claim 1, **characterized**
**in that** the at least one sensor arrangement is designed as a sensor strip (6A, 6B), which has a plurality of linearly arranged sensor elements,
wherein the sensor strip extends in the longitudinal direction (X) or transverse direction (Y) in relation to the inserted card (11').

3. Self-service terminal comprising a card-reading device (20) according to Claim 1 or 2, **characterized**
**in that** a first sensor strip (6A) detects the length (1) of the card (11') as the first spatial dimension and/or a second sensor strip (6B) detects the width (b) of the card (11') as the second spatial dimension.

4. Self-service terminal comprising a card-reading device (20) according to Claim 1 or 2, **characterized**
**in that** the card-reading device (20) has only one sensor strip (6B), which detects not only the width (b) of the card (11') but also the length (1) of the card (11') by way of the sensor strip (6B), during the insertion process of the card (11'), identifying the start and end of the said card and by way of the evaluation apparatus (4) ascertaining the length (1) of the card (11') on the basis of a time measurement on the basis of a prespecified insertion speed.

5. Self-service terminal comprising a card-reading device (20) according to Claim 3 or 4, **characterized**
**in that** a first additional sensor system (6C), which detects the thickness of the card (11') as a third dimension, is arranged in the card-reading device (20).

6. Self-service terminal comprising a card-reading device (20) according to one of Claims to 2-5, **characterized**
**in that** the sensor elements of the at least one sensor arrangement (6A, 6B) and/or the first additional sensor system (6C) are optoelectrical sensor elements.

7. Self-service terminal comprising a card-reading device (20) according to one or more of the preceding claims, **characterized**
**in that** a second additional sensor system (6D) for examining the surface of the card (11') is arranged in order to check material properties of the card (11').

8. Self-service terminal comprising a card-reading device (20) according to one or more of the preceding claims, **characterized**
**in that** the card-reading device (20) has a housing (1) and/or a receiving space (13), into which the card (11) can be retracted,
**in that** the at least one evaluation apparatus (4) is connected to mechatronic transducers, which are operated as piezoelectric sensors and/or actuators,
wherein the mechatronic transducers are arranged in or on the housing (1) and/or receiving space (13) such that the integrity of the card-reading device (20) can be checked,
wherein the evaluation apparatus (4) is designed to receive a signal from the mechatronic transducers,
the signal being excited by some of the mechatronic transducers and being detected by some of the mechatronic transducers,
in order to compare this signal with reference data and, in the case of a defined deviation, to output a warning signal, which represents a lack of integrity of the card-reading device.

9. Self-service terminal comprising a card-reading device (20) according to one or more of the preceding claims,
**characterized in that** the self-service terminal is designed as a cash machine.

10. Method for monitoring a self-service terminal, wherein the self-service terminal has a card-reading device (20) into which a card (11, 11'), on which data to be read is stored, can be inserted,
wherein the self-service terminal has at least one sensor system (6A, 6B) and an evaluation apparatus (4) connected thereto,
wherein the at least one sensor system is arranged in the card-reading device (20) and comprises at least one linearly extending sensor arrangement (6A, 6B),
wherein at least one spatial dimension (1, b) of the card (11) is checked by the evaluation apparatus (4) by means of the at least one sensor arrangement (6A, 6B) on the basis of geometric dimensions of the length (1) and/or width (b) of the card (11) in comparison with standard values for standardized cards,
**characterized**
**in that** a light barrier (7) is arranged at a retract region (8) for withheld cards (11) in the self-service terminal, the light barrier being connected to the at least one evaluation apparatus (4) and having one or more optoelectrical sensor elements by means of which manipulations at the retract region (8) are detected.

11. Method according to Claim 10, **characterized**
**in that** the card-reading device (20) has a housing (1) and/or a receiving space (13), into which the card (11) can be retracted, in order to be read,
and **in that** the card-reading device is further equipped with mechatronic transducers, which are operated as piezoelectric sensors and/or actuators and are connected to an evaluation apparatus (4),
wherein the mechatronic transducers are arranged in or on the housing (1) such that the integrity of the card-reading device (20) can be checked with the aid of the mechatronic transducers,
wherein the evaluation apparatus receives a signal from the mechatronic transducers,
the signal being excited by some of the mechatronic transducers and being detected by some of the mechatronic transducers,
in order to compare the signal with reference data and, in the case of a defined deviation, to output a warning signal, which represents a lack of integrity of the card-reading device.

## Revendications

1. Terminal de self-service équipé avec un dispositif de lecture de carte (20) dans lequel on peut insérer une carte (11, 11') sur laquelle sont stockées des données à lire,
dans lequel le terminal de self-service comporte au moins un système de capteurs (6A, 6B) et un dispositif d'évaluation (4) relié à celui-ci,
dans lequel ledit au moins un système de capteurs est disposé dans le dispositif de lecture de carte (20) et comprend au moins un ensemble de capteurs (6A, 6B) s'étendant linéairement,
dans lequel le dispositif d'évaluation (4) vérifie, au moyen dudit au moins un ensemble de capteurs (6A, 6B), au moins une dimension spatiale (l, b) de la carte (11) sur la base de dimensions géométriques de la longueur (l) et/ou de la largeur (b) de la carte (11) en comparaison avec des valeurs standard pour des cartes normalisées, **caractérisé en ce qu'**il est prévu dans le terminal de self-service au niveau d'une zone d'insertion (8) destinée à des cartes retenues (11), une barrière lumineuse (7),
qui est reliée audit au moins un dispositif d'évaluation (4) et comporte un ou plusieurs éléments capteurs opto-électriques afin de détecter des manipulations au niveau de la zone d'insertion (8).

2. Terminal de self-service équipé avec un dispositif de lecture de carte (20) selon la revendication 1,
**caractérisé en ce que** ledit au moins un ensemble de capteurs est réalisé sous la forme d'une barrette de capteurs (6A, 6B) qui comporte une pluralité d'éléments capteurs disposés linéairement,
dans lequel la barrette de capteurs s'étend dans la direction longitudinale (X) ou la direction transversale (Y) de la carte (11') insérée.

3. Terminal de self-service équipé avec un dispositif de lecture de carte (20) selon la revendication 1 ou 2,
**caractérisé en ce qu'**une première barrette de capteurs (6A) détecte la longueur (l) de la carte (11') en tant que première dimension spatiale et/ou une deuxième barrette de capteurs (6B) détecte la largeur (b) de la carte (11') en tant que deuxième dimension spatiale.

4. Terminal de self-service équipé avec un dispositif de lecture de carte (20) selon la revendication 1 ou 2,
**caractérisé en ce que** le dispositif de lecture de carte (20) ne comporte qu'une seule barrette de capteurs (6B) qui détecte non seulement la largeur (b) de la carte (11') mais également la longueur (l) de la carte (11'), la barrette de capteurs (6B) détectant, lors de l'opération d'insertion de la carte (11'), le début et la fin de cette dernière, et le dispositif d'évaluation (4) déterminant la longueur (l) de la carte (11') sur la base d'une mesure de temps et en fonction d'une vitesse d'insertion prédéterminée.

5. Terminal de self-service équipé avec un dispositif de lecture de carte (20) selon la revendication 3 ou 4,
**caractérisé en ce qu'**il est prévu dans le dispositif de lecture de carte (20) un premier système de capteurs supplémentaire (6C), qui détecte l'épaisseur de la carte (11') en tant que troisième dimension.

6. Terminal de self-service équipé avec un dispositif de lecture de carte (20) selon l'une quelconque des revendications 2-5,
**caractérisé en ce que** les éléments capteurs dudit au moins un ensemble de capteurs (6A, 6B) et/ou du premier ensemble de capteurs supplémentaire (6C) sont des éléments capteurs opto-électriques.

7. Terminal de self-service équipé avec un dispositif de lecture de carte (20) selon l'une ou plusieurs des revendications précédentes,
**caractérisé en ce qu'**il est prévu un deuxième système de capteurs supplémentaire (6D) pour examiner la surface de la carte (11') afin de vérifier des propriétés du matériau de la carte (11').

8. Terminal de self-service équipé avec un dispositif de lecture de carte (20) selon l'une ou plusieurs des revendications précédentes,
**caractérisé en ce que** le dispositif de lecture de carte (20) comporte un boîtier (1) et/ou un espace de réception (13) dans lequel la carte (11) peut être introduite,
**en ce que** ledit au moins un dispositif d'évaluation (4) est relié à des transducteurs mécatroniques qui sont utilisés en tant que capteurs et/ou actionneurs piézoélectriques,
dans lequel les transducteurs mécatroniques sont disposés dans ou sur le boîtier (1) et/ou l'espace de réception (13)
de manière à pouvoir vérifier l'intégrité du dispositif de lecture de carte (20),
dans lequel le dispositif d'évaluation (4) est conçu pour recevoir en provenance des transducteurs mécatroniques un signal
qui est excité par une partie des transducteurs mécatroniques et est détecté par une partie des transducteurs mécatroniques,
afin qu'il soit comparé à des données de référence et, en cas d'écart défini, afin de délivrer un signal d'alerte qui signale un défaut d'intégrité du dispositif de lecture de carte.

9. Terminal de self-service équipé avec un dispositif de lecture de carte (20) selon l'une ou plusieurs des revendications précédentes,
**caractérisé en ce que** le terminal de self-service est réalisé sous la forme d'un distributeur automatique de billets.

10. Procédé de surveillance d'un terminal de self-service,
dans lequel le terminal de self-service comporte un dispositif de lecture de carte (20) dans lequel on peut insérer une carte (11, 11') sur laquelle sont stockées des données à lire,
dans lequel le terminal de self-service comporte au moins un système de capteurs (6A, 6B) et un dispositif d'évaluation (4) relié à celui-ci,
dans lequel ledit au moins un système de capteurs est disposé dans le dispositif de lecture de carte (20) et comprend au moins un ensemble de capteurs (6A, 6B) s'étendant linéairement,
dans lequel au moins une dimension spatiale (l, b) de la carte (11) est vérifiée par le dispositif d'évaluation (4) au moyen dudit au moins un ensemble de capteurs (6A, 6B) sur la base de dimensions géométriques de la longueur (1) et/ou de la largeur (b) de la carte (11) en comparaison avec des valeurs standard pour des cartes normalisées,
**caractérisé en ce qu'**il est prévu dans le terminal de self-service au niveau d'une zone d'insertion (8) destinée à des cartes retenues (11), une barrière lumineuse (7),
qui est reliée audit au moins un dispositif d'évaluation (4) et comporte un ou plusieurs éléments capteurs opto-électriques au moyen duquel/desquels des manipulations au niveau de la zone d'insertion (8) sont détectées.

11. Procédé selon la revendication 10,
**caractérisé en ce que** le dispositif de lecture de carte (20) comporte un boîtier (1) et/ou un espace de réception (13) dans lequel la carte (11) peut être introduite pour être lue,
et **en ce que** le dispositif de lecture de carte est en outre équipé avec des transducteurs mécatroniques, qui sont utilisés en tant que capteurs et/ou actionneurs piézoélectriques, qui sont reliés à un dispositif d'évaluation (4),
dans lequel les transducteurs mécatroniques sont disposés dans ou sur le boîtier (1) de manière à ce que l'intégrité du dispositif de lecture de carte (20) soit vérifiée à l'aide des transducteurs mécatroniques,
dans lequel le dispositif d'évaluation reçoit en provenance des transducteurs mécatroniques un signal qui est excité par une partie des transducteurs mécatroniques et détecté par une partie des transducteurs mécatroniques,
afin de comparer le signal à des données de référence et, en cas d'écart défini, afin de délivrer un signal d'alerte qui signale un défaut d'intégrité du dispositif de lecture de carte.
